Europäisches Patentamt

European Patent Office

Office européen des brevets

(11) Veröffentlichungsnummer: **0 024 339**
**B1**

(12) **EUROPÄISCHE PATENTSCHRIFT**

(45) Veröffentlichungstag der Patentschrift: **08.12.82**

(21) Anmeldenummer: **80104726.7**

(22) Anmeldetag: **11.08.80**

(51) Int. Cl.³: **C 23 C 9/04**, **C 06 L 27/06**, **C 08 J 3/20**

(54) Verfahren zum Verhindern der bei der Herstellung und Förderung von weißpigmentierten, rieselfähigen Pulvermischungen auf Basis Polyvinylchlorid enthaltender Polymerer auftretenden Vergrauung.

(30) Priorität: **17.08.79 DE 2933419**

(43) Veröffentlichungstag der Anmeldung:
**04.03.81 Patentblatt 81/9**

(45) Bekanntmachung des Hinweises auf die Patenterteilung:
**08.12.82 Patentblatt 82/49**

(84) Benannte Vertragsstaaten:
**AT BE CH DE FR GB IT LI NL**

(56) Entgegenhaltungen:
**DE - A - 2.361 017**
**DE - B - 1 796 215**

**"Fretting damage between contacting metal-polymer interfaces" F. H. Stott, P. A. Higham und B. Bethume; "6th European Congress on Metallic Corrosion, Eurocor '77, London 19-23 September 1977. Published by the Society of Chemical Industry" (Siehe Seite 623-629).**

Die Akte enthält technische Angaben die nach dem Eingang der Anmeldung eingereicht wurden und die nicht in dieser Patentschrift enthalten sind.

(73) Patentinhaber: **WACKER-CHEMIE GMBH**
**Prinzregentenstrasse 22**
**D-8000 München 22 (DE)**

(72) Erfinder: **Kudlich, Walter, Dipl.-Ing.**
**Haydnstrasse 14**
**D-8263 Burghausen (DE)**
Erfinder: **Gerhardinger, Dieter, Ing.-Grad**
**In den Grüben 125**
**D-8263 Burghausen (DE)**
Erfinder: **Bauer, Hans, Dr. Dipl.-Chem.**
**Görresstrasse 3**
**D-8263 Burghausen (DE)**
Erfinder: **Braun, Johann**
**Brandströmstrasse 7**
**D-8263 Burghausen (DE)**
Erfinder: **Hollenbach, Georg Dipl.-Chem.**
**Marienberger Strasse 25**
**D-8263 Burghausen (DE)**

## 0 024 339

### Verfahren zum Verhindern der bei der Herstellung und Förderung von weißpigmentierten, rieselfähigen Pulvermischungen auf Basis Polyvinylchlorid enthaltender Polymerer auftretenden Vergrauung

Bei der Herstellung und Förderung von weißpigmentierten, rieselfähigen Pulvermischungen auf Basis Polyvinylchlorid enthaltender Polymerer zeigt es sich immer wieder, daß mit der Zahl der Verarbeitungsstufen der Weißgrad vermindert wird und das Material vergraut. Mischungen, die bereits durch den Mischvorgang entsprechend angegriffen sind, lessen sich kaum noch pneumatisch weiterfördern und automatisch in den Extruder eindosieren, ohne daß die Vergrauung der extrudierten Profile den tolerierbaren Grenzwert überschreitet.

Der Erfindung lag daher die Aufgabe zugrunde, ein geeignetes Verfahren zum Verhindern der bei der Herstellung und Förderung von weißpigmentierten, rieselfähigen Pulvermischungen auf Basis Polyvinylchlorid enthaltender Polymerer auftretenden Vergrauung zu finden. Gelöst wird diese Aufgabe dadurch, daß die durch die Pulvermischungen beanspruchten Oberflächen der hierbei eingesetzten Vorrichtungen boriert werden.

Bei den angesprochenen Polymeren handelt es sich dabei um für die Herstellung von Dryblends geeignete Homopolymerisate von Vinylchlorid nach dem Masse-, Suspensions- oder Emulsionsverfahren allein oder im Gemisch oder auch um übliche Co- oder Propfpolymerisate von Vinylchlorid mit anderen äthylenisch ungesättigten Monomeren. Neben Weichmachern und Schutzkolloiden können weitere Hilfsstoffe wie Gleitmittel, Füllstoffe und Stabilisatoren eingearbeitet sein, die üblicherweise mit dem Polymerisat in den Mischer eingebracht werden. Beispiele für Stabilisatoren sind Blei-, Zinn-, Barium- und Kadmiumstabilisatoren; für gleitmttel Bleistearate, Metallfettseifen, wie Kalzium- und Bariumfettseifen sowie Bleikomplexe. Als Weißpigmente kommen beispielsweise Verbindungen des Bleis (Bleiweiß), Zinks (Lithophone) und Titans (Titandioxid) in Frage.

Die Herstellung der rieselfähigen Pulvermischungen erfolgt dabei nach bekannten Verfahren in Heizmischern, die mit schnell laufenden Mischwerkzeugen ausgestattet sind und den Mischerinhalt durch die kinetische Energie in wenigen Minuten auf ca. 110 bis 140°C aufheizen, wobei dieser Vorgang auch unter Vakuum erfolgen kann. Kunststoffe, Stabilisatoren, Gleitmittel, Pigmente und gegebenenfalls Weichmacher werden dabei nach einem dem Ansatz gemäßen Zeitprogramm so aufgegeben und flüssige Bestandteile so eingedüst, daß rieselfähige, sandige Trockenmischungen (Dryblends) entstehen. Die erhaltenen Trockenmischungen werden anschließend meist gesiebt und verpackt, mechanisch oder pneumatisch weiterbefördert und schließlich in den Extruder eindosiert.

Erfindungsgemäß werden nun sämtliche Vorrichtungsteile, deren Oberflächen bei den beschriebenen Verarbeitungsstufen durch die rieselfähigen Pulvermischungen eine besondere Beanspruchung erfahren, boriert. Dies gilt in erster Linie für die Werkzeuge selbst und erst in zweiter Linie für die dem Mischer nachgeschalteten Aggregate, beispielsweise Förderaggregate zu den Sieben, Dosierzellradschleusen, Abscheideorganen wie insbesondere Zyklonen und Rohrleitungen, hierbei insbesondere die horizontalen Rohrleitungsstücke, und vor allem die Rohrkrümmer. In vertikalen Rohrleitungen und im Silo, in welchem das Material vor der Weiterverarbeitung eingelagert wird, braucht dagegen eine derartige Borierung nicht erfolgen, da deren Oberflächen keine Beanspruchung durch die hindurchtretenden oder eingelagerten Pulvermischungen erfahren.

Die Borierung der in der Regel aus Eisen oder Stahl bestehenden, beanspruchten Oberflächen vorstehend aufgeführter Vorrichtungen erfolgt zweckmäßig durch Aufbringen fester oder pastenförmiger Borierungsmittel wie sie beispielsweise in den DT—PS 17 96 215 und 21 46 472 sowie in der DT—OS 21 47 755 beschrieben sind, die als Bor abgebende Substanz, beispielsweise Ferrobor, amorphes Bor, Borcarbid und/oder Borax allein oder im Gemisch neben Aktivatoren und gegebenenfalls weiteren Zusätzen enthalten und durch nachfolgendes Eindifundieren des Bors durch eine üblicherweise zwischen 600 und 1.050°C durchgeführte Temperaturbehandlung.

Die erfindungsgemäße Borierung der bei der Herstellung und Förderung vorgenannter Pulvermischungen beanspruchten Vorrichtungsoberflächen verhindert nicht nur die Vergrauung der weißpigmentierten Dryblends, sondern auch ein Verblassen und Auskreiden der hieraus hergestellten Fertigprodukte.

### Beispiel

Die Beanspruchung der bei der Herstellung und Förderung von weißpigmentierten, rieselfähigen Pulvermischungen auf Basis Polyvinylchlorid enthaltender Polymerer eingesetzten Vorrichtungen wird im Labormischer mittels Rührflügel simuliert.

In einem handelsüblichen Labormischer mit 5 Liter Fassungsvermögen (Typ FM 10 L, Baujahr 1971, Fa. Rheinstahl Henschel AG, Kassel) wurden von den nachstehenden Testrezepturen jeweils 2,5 kg in den Mischer eingebracht und unter einer Flügeldrehzahl von ca. 1800 UpM durchmischt. Die Zugabe und Vermischung erfolgte dabei in der Art, daß anfangs bei Zimmertemperatur das Polymerisat nebst festen Zusätzen, wie beispielsweise Stabilisatoren und Gleitmitteln, in den Mischer eingebracht wurden und nachdem die Temperatur der Mischung aufgrund auftretender Scherkräfte etwa 50 bis 60°C erreicht hatte, die flüssigen Additive wie beispielsweise Chelatoren, zugesetzt und schließlich bei ca. 80°C Füllstoffe und Weißpigmente. Es wurde weiter bis zur Erreichung von etwa 120°C ge-

2

mischt und anschließend auf Raumtemperatur von etwa 25°C abgekühlt. Die gesamte Mischzeit betrug dabei etwa 10 Minuten.

Als Flügel wurden jeweils zwei flachgeschnittene Horizontalflügel mit hoher Produktscherung eingesetzt. Die Flügel waren äußerlich jeweils gleich, bestanden jedoch im ersten Fall aus einer Stahllegierung (C 67 W 3, Nr. 1.1744, Fa. Krupp AG, Essen, Analyse neben Eisen: 0,67 Gew.-% Kohlenstoff, 0,25—0,5 Gew.-% Silicium, 0,6—0,8 Gew.-% Mangan, 0,035 Gew.-% Phosphor und 0,035 Gew.-% Schwefel), im zweiten Fall aus einem anderen Stahl (V 2 A, Nr. 1.4541, Fa. Krupp AG, Essen, Analysen neben Eisen: max. 0,1 Gew.-% Kohlenstoff, max. 1 Gew.-% Silicium, max. 2 Gew.-% Mangan, 0,5 Gew.-% Titan, 9—11,5 Gew.-% Nickel und 17—19 Gew.-% Chrom) und im dritten Fall aus einer Stahllegierung wie im ersten Fall jedoch boriert durch Einbettung in Borcarbid (Typ EK—Bor, Fa. Elektroschmelzwerk, Kempten/Allgäu) und Eindiffusion von Bor bei ca. 1000°C über 6 Stunden.

Mit sämtlichen drei Drehflügelarten wurden jeweils zwei homogene Pulvermischungen nachstehender Zusammensetzung hergestellt, die sich lediglich durch die Komponente C unterschieden:

A)  50 Gew. Teile  Suspensions-PVC mit K-Wert 65

B)  50 Gew. Teile  Propfcopolymer aus Vinylchlorid mit
    10 Gew. Teilen  Äthylen/Vinylacetat-Copolymer, mit
    45 Gew.-%  Vinylacetat und einem K-Wert von 68.

C₁)  2,5 Gew. Teile  fester Barium-Cadmium-Stabilisator
     0,5 Gew. Teile  Chelator (Organophosphit)
     1,0 Gew. Teile  epoxidiertes Sojaöl
     1,3 Gew. Teile  Gleitmittel auf der Basis Polyäthylenwachs, Hydroxistearinsäure, Glycerin-
                     monooleat
     1,3 Gew. Teile  Verarbeitungshilfe modifizierter Acrylate
     3,0 Gew. Teile  Titandioxid
     3,0 Gew. Teile  Füllstoffe auf der Basis Calciumcarbonat

C₂)  4,0 Gew. Teile  fester Bleistabilisator
     0,5 Gew. Teile  Calciumstearat
     0,4 Gew. Teile  Bleistearat
     0,3 Gew. Teile  fester Barium-Cadmium-Stabilisator
     0,6 Gew. Teile  Gleitmittel auf Basis Hydroxistearinsäure, langkettige Dicarbonsäureester
     3,0 Gew. Teile  Verarbeitungshilfe modifizierter Acrylate
     3,0 Gew. Teile  Titandioxid
     3,0 Gew. Teile  Füllstoff auf der Basis Calciumcarbonat

In der Tabelle sind die Daten der insgesamt 6 homogenen Pulvermischungen bezüglich ihres Weißgrades dargestellt. Wie aus der dritten Spalte ersichtlich ist, wird durch die Borierung des Werkzeuges eine deutliche Verbesserung des Weißgrades gegenüber der Verwendung unborierten Werkzeuges erzielt.

## TABELLE

Weiβgrad L-Messung (Hunterlab)
nach (Deutsche Industrienorm) DIN 6174 Cielab Formel

| 1) Dryblend ABC$_1$ | Stahllegierung (C 67 W 3) | | Stahl (V2A) | | Stahllegierung (C 67 W 3) boriert | |
|---|---|---|---|---|---|---|
| | I | II | I | II | I | II |
| L(%) | 88,19 | 93,04 | 87,38 | 92,06 | 91,49 | 95,53 |
| a | −0,92 | −1,04 | −0,88 | −1,14 | −1,05 | −1,25 |
| b | +1,65 | +2,56 | +1,10 | +2,04 | +1,40 | +3,27 |
| Minderung des Weiβgrades in % bezogen auf Eichplatte (weiβ) | | −6,96 | | −7,94 | | −4,47 |
| 2) Dryblend ABC$_2$ | | | | | | |
| L (%) | 91,48 | 91,70 | 86,90 | 90,75 | 88,80 | 93,09 |
| a | −1,05 | −0,67 | −0,77 | −0,82 | −0,74 | −0,71 |
| b | +1,90 | +2,57 | −1,44 | +2,33 | +1,98 | +3,00 |
| Minderung des Weiβgrades in % bezogen auf Eichplatte (weiβ) | | −8,30 | | −9,25 | | −6,91 |

I = L,a,b-Werte ermittelt am Pulver (Hunterlab).

II = L,a,b-Werte ermittelt an 2,5 mm Preβplatte, hergestellt aus dem jeweiligen Dryblend über ein Walzfell und nachfolgendem Verpressen der Felle (Walzzeit: 9 Minuten bei 175°C Pressen: 10 Minuten bei 175°C und ca. 200 bar, Walzwerk: Typ WLAZ, Fa Troester, Hannover, Walzendurchmesser 150 mm, Balkenlänge 350 mm, Gleichlauf, Walzengeschwindigkeit 24 UpM).

**Patentanspruch**

Verfahren zum Verhindern der bei der Herstellung und Förderung von weißpigmentierten, rieselfähigen Pulvermischungen auf Basis Polyvinylchlorid enthaltender Polymerer auftretenden Vergrauung, dadurch gekennzeichnet, daß die durch die Pulvermischungen beanspruchten Oberflächen der hierbei eingesetzten Vorrichtungen boriert werden.

**Claim**

Method for the prevention of greying occurring during the manufacture and conveyance of white-pigmented pourable powder mixtures based on polymers containing polyvinyl chloride, characterised in that the surfaces of the devices used in such operations that are subject to stress by the powder mixtures are borided.

**Revendication**

Procédé pour empêcher la coloration grise qui se produit au cours de la préparation et du transport de mélanges pulvérulents fluents pigmentés en blanc, à base de polymères contenant du chlorure de polyvinyle, procédé caractérisé en ce que l'on borure les surfaces des appareils et dispositifs utilisés qui sont sollicitées par les mélanges pulvérulents.